# EUROPÄISCHE PATENTSCHRIFT

(11) **EP 1 563 187 B1**
(45) Veröffentlichungstag und Bekanntmachung des Hinweises auf die Patenterteilung: **08.06.2011**
(21) Anmeldenummer: 03775101.3
(22) Anmeldetag: 31.10.2003
(51) Int. Cl.: F04B 49/03, F04B 49/02, F04B 27/10, F16K 17/04, F16K 17/16

(54) **KOMPRESSOR**
COMPRESSOR
COMPRESSEUR

(30) Priorität: 07.11.2002 DE 10251803
(43) Veröffentlichungstag der Anmeldung: 17.08.2005
(73) Patentinhaber: ixetic Bad Homburg GmbH, 61352 Bad Homburg (DE)
(72) Erfinder: SCHÄFER, Tilo, 55566 Daubach (DE); WEBER, Georg, 63329 Egelsbach (DE); DI VITO, Thomas, 61273 Wehrheim (DE); HINRICHS, Jan, 61381 Friedrichsdorf (DE); BECKER, Uwe, 35510 Butzbach (DE); PARSCH, Willi, 64342 Seeheim (DE); FAGERLI, Björn, 61191 Rodheim (DE)
(86) Internationale Anmeldenummer: PCT/DE2003/003632
(87) Internationale Veröffentlichungsnummer: WO 2004/042232

(56) Entgegenhaltungen:
- EP-A- 1 225 381
- WO-A-02/02942
- US-A- 5 768 895
- US-A- 5 782 259

## Beschreibung

Die Erfindung betrifft einen Kompressor, insbesondere für Klimaanlagen in Kraftfahrzeugen, mit einer Sicherheitseinrichtung zur Hochdruckbegrenzung, wie er im Oberbegriff von Patentanspruch 1 definiert ist.

Derartige Kompressoren sind zum Beispiel aus dem Dokument WO 02/02942 A1 bekannt. So gibt es Kompressoren, die über Berstscheiben, welche bei Überschreiten des maximalen Druckes bersten, das gesamte Kältemittel-Ölgemisch in die Umgebung entlasten. Diese Kompressoren haben den Nachteil, dass zum Beispiel Fahrzeuge mit kupplungslosem Verdichter nach Ansprechen der Berstscheibe nicht mehr bewegt werden können, ohne einen Kompressorschaden zu riskieren.

Ferner sind Kompressoren mit Druckbegrenzungsventilen für das Kältemittel R134A bekannt. Deren Bauart ist aber nicht direkt auf Klimaanlagen mit dem Kältemittel CO² zu übertragen, ohne erhebliche Leckageraten bereits im Neuzustand zu riskieren. Die zurzeit verwendeten Druckbegrenzungsventile für das Kältemittel R134A haben zudem das Problem, dass nach einmaligem Ansprechen die Dichtheit deutlich verschlechtert ist.

Es ist daher Aufgabe der Erfindung, einen Kompressor darzustellen, der diese Nachteile nicht aufweist.

Die Aufgabe wird gelöst durch einen Kompressor, insbesondere für Klimaanlagen in Kraftfahrzeugen, welcher die kennzeichnenden Merkmale des Patentanspruchs 1 aufweist. Dadurch wird erreicht, dass der Kompressor auch bei weiterem Betrieb nicht beschädigt wird. Erfindungsgemäß sind die Berstscheibe und das Druckbegrenzungsventil in Reihe geschaltet. Die Berstscheibe ist auf einer Seite mit dem Hochdruck der Auslasskammer des Kompressors beaufschlagt, während sie auf der anderen Seite mit atmosphärischem Druck beaufschlagt ist. Das Druckbegrenzungsventil ist, von der Hochdruckseite her gesehen, hinter der Berstscheibe angeordnet.

Bevorzugt wird weiterhin ein Kompressor, bei welchem das Druckbegrenzungsventil auf einen gegebenenfalls deutlich niedrigeren Öffnungsdruck als die Berstscheibe ausgelegt ist. Das Druckbegrenzungsventil entlastet zur Atmosphärenseite hin. Weiterhin wird ein Kompressor bevorzugt, bei welchem das Druckbegrenzungsventil eine definierte Leckage besitzt, während die Berstscheibe hermetisch dicht ist. Die definierte Leckage des Druckbegrenzungsventils hat den Vorteil, dass sich in dem Raum zwischen Berstscheibe und Ventil kein Druck aufbauen kann, solange die Berstscheibe unzerstört ist. Somit wird das Ansprechverhalten der Berstscheibe nicht beeinflusst.

Auch wird ein Kompressor bevorzugt, bei welchem die definierte Leckage durch einen Ventilsitz oder einen Ventilkolben des Druckbegrenzungsventils aus porösem Werkstoff herstellbar ist. Weiterhin wird ein Kompressor bevorzugt, bei welchem die definierte Leckage des Druckbegrenzungsventils durch eine Bypasskerbe oder eine Bypassbohrung oder durch eine Oberflächenunebenheit oder eine Oberflächenrauheit im Bereich des Ventilsitzes oder des Ventilkolbens herstellbar ist. Weiterhin kann die definierte Leckage durch die Permeabilität einer Elastomerdichtung am Ventilsitz oder Ventilkolben realisiert werden. Ein erfindungsgemäßer Kompressor zeichnet sich dadurch aus, dass über das Druckbegrenzungsventil nach Unterschreiten des Einstelldruckes das in der Anlage befindliche restliche Kältemittel sich nur noch langsam über die Leckagestelle entspannt. Durch dieses langsame, gezielte Ablassen des Gases wird gewährleistet, dass die Anlage für bestimmte Zeit eingeschränkt funktionsfähig bleibt und der Anwender Zeit hat, eine Werkstatt aufzusuchen, ohne einen Kompressorschaden zu riskieren, der ansonsten auftreten würde, weil das schlagartig austretende Kältemittel das Öl mitgerissen hätte und die Schmierung des Kompressors zusammengebrochen wäre.

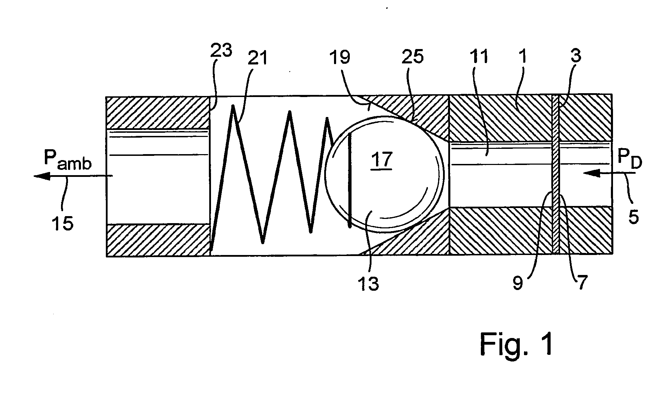

Die Erfindung wird nun anhand der Figur beschrieben.

Die Figur zeigt einen Gehäuseteil 1, welcher zum Beispiel integrierter Bestandteil eines Kompressorgehäuses sein kann. In dem Gehäuseteil 1 ist eine Berstscheibe 3 eingebettet, welche auf ihrer Seite 7 vom Hochdruck 5, welcher im Auslassbereich des Kompressors herrscht, beaufschlagt ist. Auf der Seite 9 der Berstscheibe, das heißt im Bereich 11 der Sicherheitseinrichtung, ist die Berstscheibe im unzerstörten Zustand mit dem Atmosphärendruck 15 beaufschlagt, da das Druckbegrenzungsventil 13 nicht leckagefrei abschließt und dadurch der Atmosphärendruck 15 bis in dem Bereich 11 vorherrschen kann. Das Druckbegrenzungsventil 13 kann zum Beispiel, wie hier dargestellt, aus einem kugelförmigen Ventilkörper 17 und einem kegelförmigen Ventilsitz 19 bestehen, wobei der kugelförmige Ventilkörper 17 durch eine Feder 21 in den Ventilsitz 19 gepresst wird. Die Federvorspannkraft der Feder 21, welche den Öffnungsdruck des Druckbegrenzungsventils bestimmt, kann durch eine entsprechende Auflage 23 der Feder 21 eingestellt werden. Das Druckbegrenzungsventil 13 wird dabei auf einen Öffnungsdruck eingestellt, welcher deutlich unter dem Berstdruck der Berstscheibe 3 liegt, sodass es beim Auslösen der Berstscheibe sofort öffnet. Das Druckbegrenzungsventil 13 soll dabei im Abdichtbereich 25 zwischen dem Ventilsitz 19 und dem Ventilkörper 17 eine definierte Leckagestelle besitzen und dadurch nicht hermetisch abdichten. Diese Leckagestelle ist sowohl darstellbar durch einen porösen Werkstoff für den Sitz 19 oder für den kugelförmigen Ventilkörper 17 als auch durch eine Bypasskerbe im Bereich 25 oder eine Bypassbohrung oder durch entsprechende Oberflächenbeschaffenheit, Oberflächenrauhigkeiten und ähnliche Strukturen, welche im Bereich 25 eine geringe Leckage und damit bei unversehrter Berstscheibe ein Vorherrschen des Atmosphärendrucks 15 bis in den Ventilbereich 11 ermöglichen. Wenn der Berstdruck der Berstscheibe 3 überschritten wird und die Berstscheibe 3 durch den Hochdruck 5 gegen den Atmosphärendruck 15 zerbirst und ein Abströmen des Kältemittels aus dem Kompressor ermöglicht, so wird das abströmende Kältemittel unter dem erheblich niedrigeren Einstelldruck des Druckbegrenzungsventils 13 so lange in die Atmosphäre abströmen, bis auch der über die Federkraft eingestellte Öffnungsdruck des Druckbegrenzungsventils innerhalb der Klimaanlage unterschritten wird. Danach geht das Druckbegrenzungsventil 13 wieder in eine geschlossene Stellung, und das im Klimakreislauf verbleibende Kältemittel inklusive des für die Schmierung notwendigen Schmierstoffes kann nur noch langsam und damit über einen größeren Zeitraum über die Leckagestelle im Bereich 25 entweichen. Durch dieses langsame, gezielte Ablassen des Gases wird gewährleistet, dass die Anlage für bestimmte Zeit eingeschränkt funktionsfähig bleibt und der Anwender Zeit hat, eine Werkstatt aufzusuchen, ohne sofort einen Kompressorschaden zu riskieren, da noch Kältemittel und damit Schmiermittel in der Anlage vorhanden ist. Ein weiterer Vorteil dieser Sicherheitseinrichtung besteht auch darin, dass der Druck innerhalb der Klimaanlage nicht schlagartig vom maximalen Druck auf den Atmosphärendruck abgebaut wird und dadurch zum Beispiel in Dichtungen diffundiertes Kältemittel, welches sich innerhalb des Dichtungswerkstoffes noch im Hochdruckzustand befinden kann, durch plötzliche Druckabsenkung außerhalb der Dichtung zur explosiven Dekompression und damit zur Zerstörung der Dichtungen führen kann.

## Patentansprüche

1. Kompressor, insbesondere für Klimaanlagen in Kraftfahrzeugen, mit einer Sicherheitseinrichtung zur Hochdruckbegrenzung, wobei die Sicherheitseinrichtung bis zum ersten Ansprechen hermetisch dicht ist und danach den Systemdruck über eine definierte Leckage absenkt und
die Sicherheitseinrichtung eine Kombination aus Berstscheibe 3 und Druckbegrenzungsventil 13 aufweist, **dadurch gekennzeichnet, dass** das Druckbegrenzungsventil 13 eine definierte Leckagestelle besitzt und **dadurch** nicht hermetisch abdichtet, während die Berstscheibe 3 hermetisch dicht ist.

2. Kompressor nach Anspruch 1, **dadurch gekennzeichnet, dass** die Berstscheibe 3 und das Druckbegrenzungsventil 13 in Reihe geschaltet sind.

3. Kompressor nach Anspruch 2, **dadurch gekennzeichnet, dass** die Berstscheibe 3 auf einer Seite 7 mit dem Hochdruck 5 der Auslasskammer des Kompressors und auf der anderen Seite 9 mit atmosphärischem Druck 15 beaufschlagt ist.

4. Kompressor nach einem der vorhergehenden Ansprüche, **dadurch gekennzeichnet, dass** das Druckbegrenzungsventil 13, von der Hochdruckseite 5 her gesehen, hinter der Berstscheibe 3 angeordnet ist.

5. Kompressor nach einem der vorhergehenden Ansprüche, **dadurch gekennzeichnet, dass** das Druckbegrenzungsventil 13 auf einen deutlich niedrigeren Öffnungsdruck als die Berstscheibe 3 ausgelegt ist.

6. Kompressor nach einem der vorhergehenden Ansprüche, **dadurch gekennzeichnet, dass** das Druckbegrenzungsventil 13 das Kältemittel zur Atmosphäre 15 hin entlastet.

7. Kompressor nach Anspruch 1, **dadurch gekennzeichnet, dass** sich durch die definierte Leckage in dem Raum 11 zwischen Berstscheibe 3 und Ventil 13 kein Druck aufbauen kann, solange die Berstscheibe 3 unzerstört ist.

8. Kompressor nach Anspruch 1 bis Anspruch 7, **dadurch gekennzeichnet, dass** die definierte Leckage durch einen Ventilsitz 19 oder Ventilkolben 17 aus porösem Werkstoff realisierbar ist.

9. Kompressor nach Anspruch 1 bis Anspruch 7, **dadurch gekennzeichnet, dass** die definierte Leckage durch eine Bypasskerbe oder eine Bypassbohrung am Ventilsitz 19 oder am Ventilkolben 17 oder durch eine Oberflächenrauheit oder eine Oberflächenunebenheit am Ventilsitz 19 oder am Ventilkolben 17 realisierbar ist.

10. Kompressor nach Anspruch 1 bis Anspruch 7, **dadurch gekennzeichnet, dass** die definierte Leckage durch eine Elastomerdichtung am Ventilsitz 19 oder am Ventilkolben 17 und deren Permeabilität für das Kältemittel realisierbar ist.

11. Kompressor nach einem der vorhergehenden Ansprüche, **dadurch gekennzeichnet, dass** über das Druckbegrenzungsventil 13 nach Abfallen des Druckes 5 in der Klimaanlage unter den Einstelldruck das Druckbegrenzungsventil 13 schliesst und sich das restliche Kältemittel nur durch die Leckage langsam entspannt.

## Claims

1. A compressor, in particular for air conditioners in motor vehicles, having a safety device for limiting high pressure, the safety device being hermetically sealed until it is triggered for the first time and thereafter lowering the system pressure via a defined leakage, and the safety device having a combination of a bursting disk 3 and a pressure limiting valve 13, **characterized in that** the pressure limiting valve 13 has a defined leaking location and as a result is not hermetically sealed, while bursting disk 3 is hermetically sealed.

2. The compressor according to Claim 1, **characterized in that** bursting disk 3 and pressure limiting valve 13 are connected in series.

3. The compressor according to Claim 2, **characterized in that** bursting disk 3 is subjected to the high pressure 5 of the output chamber of the compressor on one side 7, and to atmospheric pressure 15 on the other side 9.

4. The compressor according to one of the preceding claims, **characterized in that** pressure limiting valve 13 is situated behind bursting disk 3, seen from the high pressure side 5.

5. The compressor according to one of the preceding claims, **characterized in that** pressure limiting valve 13 is designed for a significantly lower opening pressure than bursting disk 3.

6. The compressor according to one of the preceding claims, **characterized in that** pressure limiting valve 13 releases the coolant to the atmosphere 15.

7. The compressor according to Claim 1, **characterized in that** no pressure is able to build up in the space 11 between bursting disk 3 and valve 13 due to the defined leakage, as long as bursting disk 3 is intact.

8. The compressor according to Claim 1 through Claim 7, **characterized in that** the defined leakage is realizable by means of a valve seat 19 or valve piston 17 of porous material.

9. The compressor according to Claim 1 through Claim 7, **characterized in that** the defined leakage is realizable by means of a bypass groove or a bypass hole on valve seat 19 or on valve piston 17, or by a surface roughness or surface unevenness on valve seat 19 or on valve piston 17.

10. The compressor according to Claim 1 through Claim 7, **characterized in that** the defined leakage is realizable by means of a an elastomeric seal on the valve seat 19 or valve piston 17 and its permeability for the coolant.

11. The compressor according to one of the preceding claims, **characterized in that** by means of pressure limiting valve 13, after the pressure 5 in the air conditioner has fallen below the set pressure, pressure limiting valve 13 closes and the remaining coolant is released only slowly through the leakage.

## Revendications

1. Compresseur, en particulier pour des installations de climatisation dans des véhicules automobiles, avec un dispositif de sécurité pour limiter la haute pression, **caractérisé en ce que** ledit dispositif de sécurité est hermétiquement clos jusqu'au premier enclenchement, avant de réduire la pression du système au moyen d'une fuite définie, et **en ce que** le dispositif de sécurité présente une combinaison d'un disque de rupture 3 et d'une soupape de limitation de pression 13, **caractérisé en ce que** ladite soupape de limitation de pression 13 présente un point de fuite défini et n'est pas hermétiquement étanche de ce fait, alors que le disque de rupture 3 est hermétiquement étanche.

2. Compresseur selon la revendication 1, **caractérisé en ce que** le disque de rupture 3 et la soupape de limitation de pression 13 sont montés en ligne.

3. Compresseur selon la revendication 2, **caractérisé en ce que** le disque de rupture 3 est sur un côté 7 exposé à la haute pression 5 du compartiment d'échappement du compresseur et soumis à la pression atmosphérique 15 sur l'autre côté 9.

4. Compresseur selon l'une des revendications précédentes, **caractérisé en ce que** la soupape de limitation de pression 13 est disposée derrière le disque de rupture 3, si l'observation est effectuée depuis le côté haute pression.

5. Compresseur selon l'une des revendications précédentes, **caractérisé en ce que** la soupape de limitation de pression 13 est prévue avec une pression d'ouverture sensiblement inférieure à celle du disque de rupture 3.

6. Compresseur selon l'une des revendications précédentes, **caractérisé en ce que** la soupape de limitation de pression 13 évacue le réfrigérant vers l'atmosphère 15.

7. Compresseur selon la revendication 1, **caractérisé en ce qu'**aucune pression ne peut se former en raison de la fuite définie dans l'espace entre le disque de rupture 3 et la soupape 13 tant que le disque de rupture 3 est intact.

8. Compresseur selon les revendications 1 à 7, **caractérisé en ce que** la fuite définie peut être obtenue par un siège de soupape 19 ou un piston de soupape 17 en matériau poreux.

9. Compresseur selon les revendications 1 à 7, **caractérisé en ce que** la fuite définie peut être obtenue par une rainure de dérivation ou un alésage de dérivation sur le siège de soupape 19 ou le piston de soupape 17, ou encore par une rugosité de surface ou une inégalité de surface sur le siège de soupape 19 ou le piston de soupape 17.

10. Compresseur selon les revendications 1 à 7, **caractérisé en ce que** la fuite définie peut être obtenue par un joint élastomère sur le siège de soupape 19 ou le piston de soupape 17, et par la perméabilité de celui-ci au réfrigérant.

11. Compresseur selon l'une des revendications précédentes, **caractérisé en ce qu'**au moyen de la soupape de limitation de pression 13 et après la baisse de pression en dessous la pression réglée dans l'installation de climatisation, la soupape de limitation de pression 13 se ferme et le réfrigérant résiduel se détend lentement, exclusivement au travers de la fuite.
